# EUROPÄISCHE PATENTANMELDUNG

(11) **EP 2 026 016 A2**
(43) Veröffentlichungstag der Anmeldung: **18.02.2009**
(21) Anmeldenummer: 08013383.8
(22) Anmeldetag: 25.07.2008
(51) Int. Cl.: F24J 2/04

(54) **Dachziegel**

(30) Priorität: 02.08.2007 AT 12122007
(71) Anmelder: Deutsch, Wolfgang, 6074 Rinn (AT)
(72) Erfinder: Tilg, Hubert, 6465 Nassereith (AT)
(74) Vertreter: Gangl, Markus

(57) **Zusammenfassung**

Dachziegel (1) mit einem Ziegelkörper (2), mindestens zwei Fluidanschlüssen (3) und einer die Fluidanschlüsse verbindenden Fluidleitung (4), wobei der Ziegelkörper (2) einen Kanal (5) aufweist, in welchen die Fluidleitung (4) eingesetzt ist,

## Beschreibung

Die Erfindung betrifft einen Dachziegel mit einem Ziegelkörper, mindestens zwei Fluidanschlüssen und einer die Fluidanschlüsse verbindenden Fluidleitung. Kurz gesagt betrifft die Erfindung einen Solardachziegel, der die Funktion eines Dachziegels und eines Solarpaneels in sich vereint.

Aus der DE 31 40 235 ist bereits eine Dachabdeckung aus vorgeformten Dachplatten bekannt, bei der zwischen den Dachplatten Kanäle zur Aufnahme von Fluidleitungen ausgebildet sind. Beim Verlegen der einzelnen Dachplatten entsteht durch die Verbindung dieser Dachplatten ein Kanal, worin die Fluidleitung aufgenommen wird. Bei der Montage kommt es durch das separate Verlegen der Dachplatten und der Fluidleitung zu einem sehr hohen zeitlichen Aufwand.

Aus der GB 2 402 999 sind gattungsgemäße Dachpaneele bekannt, bei denen die Kanäle zur Aufnahme der Fluidleitung allerdings im Isoliermaterial, und nicht im Ziegelkörper, gebildet werden. Ein Nachteil dieser Erfindung liegt darin, dass die Dachpaneele seriell geschaltet sind, wodurch der Wirkungsgrad der Sonnenenergie mit der Länge der Leitung abnimmt.

Aus der FR 2 754 840 ist ein gattungsfremder Dachziegel bekannt, bei dem das Fluid direkt durch den Kanal fließt. Es ist hier folglich keine separate Fluidleitung vorgesehen, was den Nachteil bringt, dass die Wärmeträgerflüssigkeit direkt mit dem Dachziegel in Berührung kommt, und dadurch die Beschaffenheit des Ziegelkörpers sowohl der Witterung als auch dem Fluid angepasst sein muss.

Aus der US 6,718,703 ist ein weiterer gattungsfremder Dachziegel bekannt, bei dem ebenfalls das Fluid direkt durch den Ziegel fließt und dabei mit ihm in Berührung kommt.

Aufgabe der Erfindung ist es, die vorbeschriebenen Nachteile zu vermeiden und einen gegenüber dem Stand der Technik verbesserten Dachziegel anzugeben. Aufgabe ist es des Weiteren, die zusätzliche Montage von Solarpaneelen auf einem Dach zu verhindern, was Kosten spart, den Montageaufwand verringert und den negativen Beigeschmack einer optischen Beeinträchtigung der Architektur eines Gebäudes verhindert. Es liegt der Erfindung auch zugrunde, das Anbringen von zusätzlichen Solarpaneelen zu verhindern, wodurch ein Eingriff in die Dachfläche nicht ersichtlich ist.

Dies wird beim erfindungsgemäßen Dachziegel dadurch erreicht, dass der Ziegelkörper einen Kanal aufweist, in welchen die Fluidleitung eingesetzt ist. Der große Vorteil dabei ist, dass keine zusätzlichen Solarpaneele auf einem gesamten Dach angebracht werden müssen, sondern direkt bei Montage der Dachziegel ein modulares Solarfeld entsteht.

Ein wichtiges Ausführungsbeispiel sieht dabei vor, dass der Dachziegel einen unterhalb des Ziegelkörpers und der Fluidleitung angebrachten Isolierkörper aufweist.

Schutz wird weiter begehrt für einen Dachziegel mit einem Ziegelkörper und einer Fluidleitung, wobei ein Isolierkörper vorgesehen ist, der mit dem Ziegelkörper verbunden ist. Diese beiden Elemente können mechanisch oder durch chemische Verfahren - wie beispielsweise Vulkanisieren oder Kleben - miteinander verbunden werden. Für die Montage bringt das Verbinden von Ziegelkörper und Isolierkörper den großen Vorteil, dass der gesamte Dachziegel mitsamt Isolierkörper auf den Dachlatten aufgebracht wird. Darüber hinaus wird durch diese Wärmedämmung die gesamte Wärmeenergie im Ziegelkörper und den darin liegenden Fluidleitungen gehalten, wodurch ein sehr hoher Wirkungsgrad erzielt wird. Der Isolierkörper kann aus einem Schaum (z. B. Polyurethan) bestehen, der auch eventuelle hohe Schneelasten tragen kann. Es kann vorgesehen sein, dass dieser Schaum mit Pestizidariteilen versehen ist, um Schimmelbildung und Insektenbefall zu verhindern.

In einem Ausführungsbeispiel kann der Ziegelkörper des Dachziegels so ausgeführt sein, dass der Ziegelkörper den Isolierkörper - zumindest größtenteils - umgibt.

Eine bevorzugte Ausführungsform kann vorsehen, dass die Kontur der Fluidleitung und die Kontur des Kanals aneinander angepasst sind. Somit ist bei einer derartigen Ausführung eine separate Rohrleitung in einem der Rohrleitung im Wesentlichen folgenden Kanal im oder unterhalb des Ziegelkörpers angeordnet.

In einem weiteren Ausführungsbeispiel wird ein hoher Wirkungsgrad dadurch erzielt, dass die Kanalwandung die Fluidleitung zum Großteil kontaktiert. Durch diese Ausführungsform wird die Wärmeenergie im Ziegelkörper durch die Fluidleitung optimal an das Fluid weitergegeben.

Des Weiteren sieht ein Ausführungsbeispiel vor, dass die Fluidleitung unterhalb der Oberseite des Dachziegels verläuft. Durch diese Ausführungsform kann die Sonnenenergie gleichmäßig von der gesamten Oberfläche aufgenommen werden und an die unterhalb liegende Fluidleitung weitergegeben werden.

Weiters sieht ein Ausführungsbeispiel vor, dass die Fluidleitung unterhalb der Oberseite des Ziegelkörpers verläuft. Das bedeutet, wenn die Fluidleitung nicht komplett vom Kanal des Ziegelkörpers umgeben ist, sondern von diesem zumindest teilweise nicht umgeben wird, ist dies ausführungsgemäß nur an der Unterseite des Ziegelkörpers vorgesehen. An der Oberseite wäre die Fluidleitung ungeschützt der Witterung ausgesetzt.

Eine bevorzugte Ausführungsform sieht vor, dass die Fluidleitung im Ziegelkörper verläuft. Durch diese Ausführungsform ist die Weitergabe der Wärme des gesamten Ziegelkörpers an die Fluidleitung von besserer Wirkung.

Dazu sieht ein weiteres Ausführungsbeispiel vor, dass die Fluidleitung vollständig vom Kanal umschlossen ist.

Gemäß einem weiteren Ausführungsbeispiel der Erfindung besteht die Fluidleitung aus einem zum Ziegelkörper verschiedenen Material.

Eine weitere Ausführungsform sieht vor, dass die Fluidleitung geschlängelt verläuft. Durch diesen schlangenförmigen Verlauf der Fluidleitung wird die gesamte Sonnenenergieabsorptionsfläche des Dachziegels am besten ausgenutzt. Natürlich ist auch ein spiral-, kreisförmiger oder sonstiger Verlauf der Fluidleitungen denkbar

Weiters sieht eine Ausführungsform vor, dass der Dachziegel derart ausgeführt ist, dass auf der Oberseite des Dachziegels zumindest bereichsweise eine selektive Absorberbeschichtung, beispielsweise Titan-Nitrit-Oxid, aufgebracht ist. Diese Absorberbeschichtung sollte am besten direkt oberhalb der Fluidleitungen auf der Oberfläche des Dachziegels aufgebracht sein. Bei dieser Ausführungsform ist auch zu beachten, dass diese Absorberbeschichtung mittels einer erhöhten Antireflex- und Schutzschicht gegen jegliche Wetter- und Korrosionseinflüsse schützen soll. Zudem kann diese Schicht gegen zu hohe Wärmeabstrahlung bzw. Konvektion durch Luftströmungen (Wind) genutzt werden.

Die Oberfläche der Schutzschicht kann zusätzlich noch veredelt werden, wodurch sichergestellt wird, dass langfristig - ohne zusätzliche besondere Reinigungsmaßnahmen der Oberfläche des Dachziegels - ein hoher Wirkungsgrad zur Absorbierung der Solarenergie bestehen bleibt.

Zwischen den eben genannten Bereichen der Absorberbeschichtung kann laut einem weiteren Ausführungsbeispiel vorgesehen sein, dass auf dem Dachziegel wenigstens eine, vorzugsweise drei, Versteifungsrippe/n vorgesehen ist/sind. Diese Versteifungsrippen dienen sowohl der Stabilität als auch der Optik des Dachziegels.

Des Weiteren kann bei einem Ausführungsbeispiel vorgesehen sein, dass an der/den Versteifungsrippe/n wenigstens ein Sonnenlicht reflektierender Bereich angeordnet ist. Durch diese reflektierenden Bereiche an den Seiten der Versteifungsrippen kann das einfallende Sonnenlicht auch bei flachem Einfallswinkel auf die Absorberbeschichtung gelenkt werden. Dadurch kann in den Morgen- und in den Abendstunden das Sonnenlicht besser absorbiert werden.

Ein wichtiges Ausführungsbeispiel sieht vor, dass der Ziegelkörper im Wesentlichen aus einer Aluminiumlegierung besteht. Aluminiumlegierungen bieten eine große Korrosionsbeständigkeit sowie eine hohe Wärmeleitfähigkeit.

Des Weiteren sieht ein Ausführungsbeispiel vor, dass die Fluidanschlüsse an der von der Oberseite des Dachziegels abgewandten Seite des Ziegelkörpers von diesem abstehen. Durch diese Art der Ausführung der Anschlüsse können diese bei der Montage leicht in die direkt darunter liegenden Fluidverteiler- und Fluidsammelleitungen eingesetzt werden.

Ein weiteres Ausführungsbeispiel sieht vor, dass die Fluidanschlüsse in unmittelbarer Umgebung eines Befestigungselementes angeordnet sind. Ausführungsgemäß sind die Fluidanschlüsse für Zu- und Abfluss möglichst nahe aneinander und mittig im oberen Bereich am Dachziegel angeordnet, um Längendehnungen durch Temperaturunterschiede optimal zu kompensieren, wodurch die Dichtelemente der Anschlüsse weniger beansprucht werden. Das Dichtelement ist vorzugsweise als Standard-O-Ring ausgeführt. Jegliche Kombination mit einem zusätzlichen Stützring oder einer speziellen Querschnittsgeometrie des Dichtelements ist in Abhängigkeit vom jeweiligen Fluid ausführbar.

Ein weiterer zu schützender Aspekt der Erfindung ist das System, welches mindestens zwei vorher beschriebene Dachziegel, mindestens eine Fluidverteilerleitung und mindestens eine Fluidsammelleitung umfasst. Bei diesem System ist wichtig, dass die Fluidleitung eines jeden Dachziegels an einem Ende der Fluidleitung über einen Fluidanschluss mit der Fluidverteilerleitung und am anderen Ende der Fluidleitung über einen weiteren Fluidanschluss mit der Fluidsammelleitung verbunden ist. Durch diese parallele Schaltung wird jeder Dachziegel separat mit noch nicht erwärmten Fluid versorgt, welches im Dachziegel erwärmt wird und durch die Fluidsammelleitung abgeführt wird.

Des Weiteren sieht ein Ausführungsbeispiel des Systems vor, dass die Dachziegel teilweise überlappend angeordnet sind und die Hauptfluidleitungen im Wesentlichen unterhalb dieser Überlappung der Dachziegel verlaufen.

Ebenfalls kann im System vorgesehen sein, dass die Dachziegel in Form einer Matrix angeordnet sind, wobei alle Dachziegel einer Reihe der Matrix parallel an den Hauptfluidleitungen angeschlossen sind. Hierzu ist davon auszugehen, dass für jede Reihe eine Fluidverteilerleitung und eine Fluidsammelleitung separat vorgesehen ist. Allerdings soll dadurch nicht ausgeschlossen werden, dass diese Leitungen auch mit mehreren Reihen von Dachziegeln gleichzeitig verbunden sein könnten.

Wenn die Dachziegel im Bereich der Überlappung der Dachziegel über Befestigungselemente, vorzugsweise Befestigungsschrauben, miteinander und/oder mit einer Dachlatte verbindbar sind, dann sind die erfindungsgemäßen Dachziegel besonders gut für die Selbstmontage geeignet. Beim Aufbringen der einzelnen Dachziegel auf die Dachlatten werden die Dachziegel über die Fluidanschlüsse in die in den Dachlatten liegenden Fluidverteiler- und Fluidsammelleitungen eingesetzt und dann noch über Befestigungselemente zueinander fixiert.

Des Weiteren kann ein System vorgesehen sein, welches die Fluidverteilerleitung, die Fluidleitung in den Dachziegeln und die Fluidsammelleitung mit einer Fluidhauptsammelleitung und einer Fluidhauptverteilerleitung verbindet, wodurch ein Fluidkreislauf gebildet wird, bei dem ein Wärmetauscher zwischen Fluidhauptsammel- und Fluidhauptverteilerleitung angeordnet ist. Hierzu ist anzuführen, dass die Fluidleitung im Dachziegel aus einem gut wärmeleitenden Material, wie beispielsweise Kupfer, bestehen sollte. Im Gegensatz dazu sollten alle anderen Leitungen aus einem schlecht wärmeleitenden Material, wie beispielsweise diverse Kunststoffe (PP oder PA mit Glasfaser verstärkt), bestehen. Es ist aber auch durchaus möglich, dass diese Leitungen aus einer Alulegierung bestehen. Allerdings ist dies nur bei entsprechend guter Isolierung sinnvoll.

Eine bevorzugte Ausführungsform dieses Systems sieht vor, dass das Fluid eine Flüssigkeit, vorzugsweise Wasser oder eine Wasser-Glykol-Mischung, ist. Es können jedoch auch andere Flüssigkeiten bzw. Gase (diverse Edelgase wie z. B. Helium), die ebenfalls zur Wärmeweiterleitung geeignet sind, als wärmeleitmedien verwendet werden.

Darüber hinaus wird Schutz begehrt für eine Dachlatte für ein vorher genanntes System, wobei mit der Dachlatte wenigstens eine Fluidverteilerieitung oder Fluidsammelleitung angeordnet ist. Besonders für die Montage eines solchen Systems sind erfindungsgemäße Dachlatten hervorragend geeignet. Bei sämtlichen - mit Solardachziegeln ausgeführten - Dachkonstruktionen des Standes der Technik werden die Fluidverteiler- und Fluidsammelleitung in separaten Leitungen, meist irgendwo im Bereich unterhalb der Dachschindeln bzw. Dachziegeln oder am Rand des Daches, zu- und abgeführt. Erfindungsgemäß besteht die große Neuerung und Erleichterung darin, dass die Dachlatten und die Fluidverteiler- und Fluidsammelleitungen eine Einheit bilden, wodurch aus der sonst notwendigen Verlegung der einzelnen Dachlatten und der zusätzlichen bzw. getrennten Verlegung der gesamten Leitungen ein einziger Arbeitsschritt entsteht. Die Leitungen können in die Dachlatte integriert sein oder direkt an der Dachlatte anliegen und müssen sich nicht zwangsweise in der Dachlatte befinden. Die Dachlatte und die Leitungen können somit aus verschiedenen Materialien bestehen. Ebenso soll in diesem Zusammenhang darauf hingewiesen werden, dass die gesamte Konstruktion auch so ausgeführt sein kann, dass sich die Fluidverteiler- und Fluidsammelleitungen nicht in den Dachlatten befinden, sondern in den Konterlatten, die vom Giebel eines Daches zur Traufe führen. Durch diese vorteilhafte Ausführung von Solardachziegeln besteht besonders für private Hausbauer der Vorteil darin, dass alle Solarelemente in Selbstmontage aufgebracht werden.

Als besonders vorteilhaft hat es sich hierbei herausgestellt, die wenigstens eine Fluidverteilerleitung oder Fluidsammelleitung direkt als Kanal in der Dachlatte auszubilden. In diesem Fall ist die Dachlatte direkt als Fluidverteiler- und Fluidsammelleitung ausgeführt.

Schutz wird auch begehrt für eine Anordnung mit einem Dachziegel, insbesondere mit einem Dachziegel nach einer der vorher genannten Ausführungsformen, der erste Fluidanschlüsse aufweist, einer Dachlatte, insbesondere mit einer vorher beschriebenen Dachlatte, auf welcher der Dachziegel auflegbar ist und wenigstens einer Fluidverteiler- und einer Fluidsammelleitung, die zweite Fluidanschlüsse aufweisen. Die Erfindungsgemäße Ausführung sieht hierbei vor, dass die ersten Fluidanschlüsse so am Dachziegel angeordnet sind, dass durch die Auflage des Dachziegels auf die Dachlatte eine fluidleitende Verbindung mit den zweiten Fluidanschlüssen herstellbar ist. Wichtig bei einer solchen Anordnung ist wie schon angedeutet, dass die Fluidanschlüsse in unmittelbarer Nähe zueinander angeordnet sind, damit bei temperaturbedingter Ausdehnung des Ziegelkörpers keine Beschädigungen im Bereich zwischen den in die Dachlatte eingesetzten Fluidanschlüssen oder an den Fluidanschlüssen selbst auftreten.

Hierzu sieht eine Ausführungsform vor, dass die ersten und zweiten Fluidanschlüsse nur reibschlüssig miteinander verbunden sind. Dies bietet den Vorteil, dass die reibschlüssige Verbindung flexibler als eine formschlüssige Verbindung auf extreme Spannungen reagieren kann.

Schutz wird auch begehrt für die Verwendung eines vorher erwähnten Dachziegels als Fassadenelement. Hierbei dienen die Ziegel als Verkleidung einer Hausfassade, in welcher ein Fluid durch Solarenergie erwärmt werden kann.

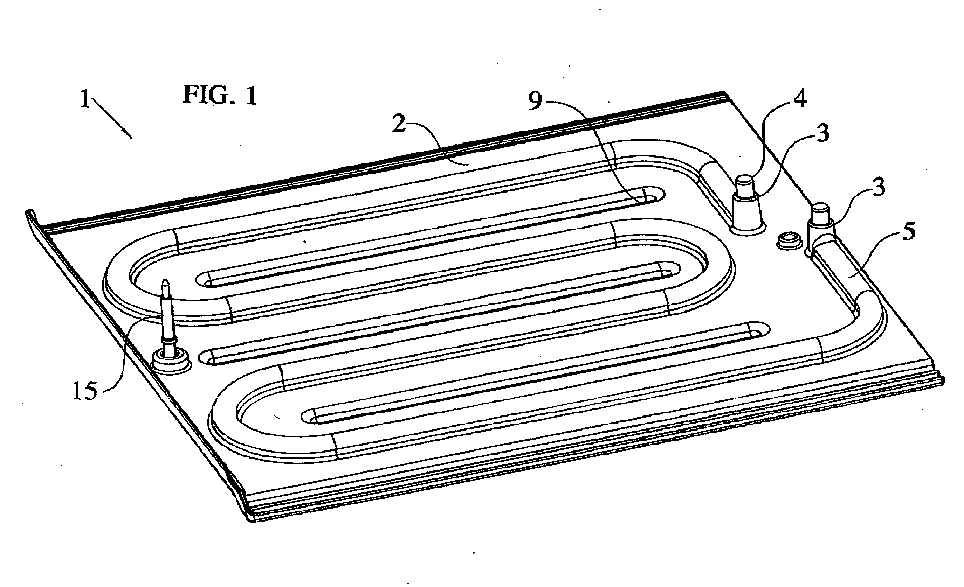

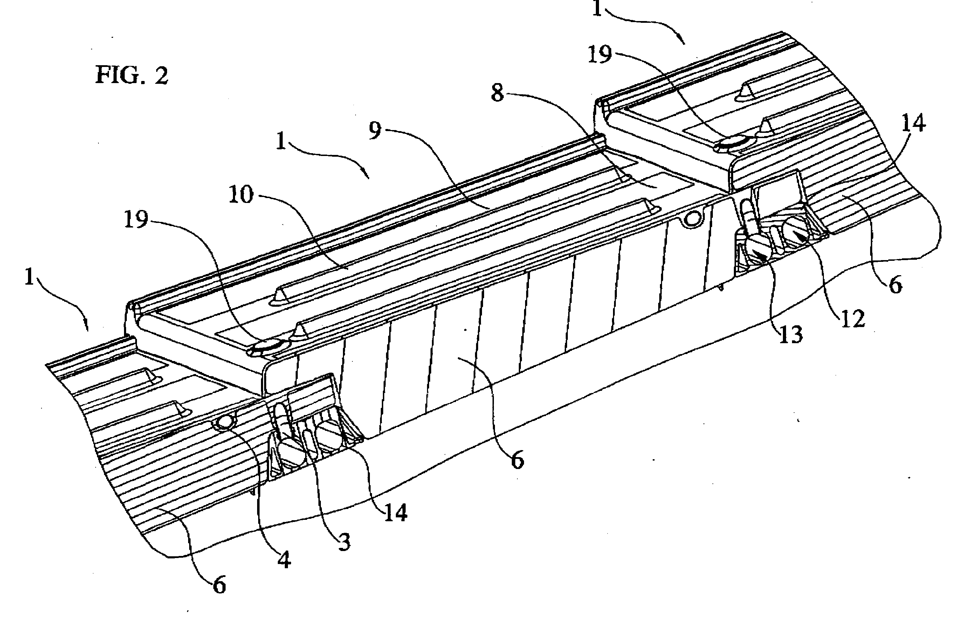

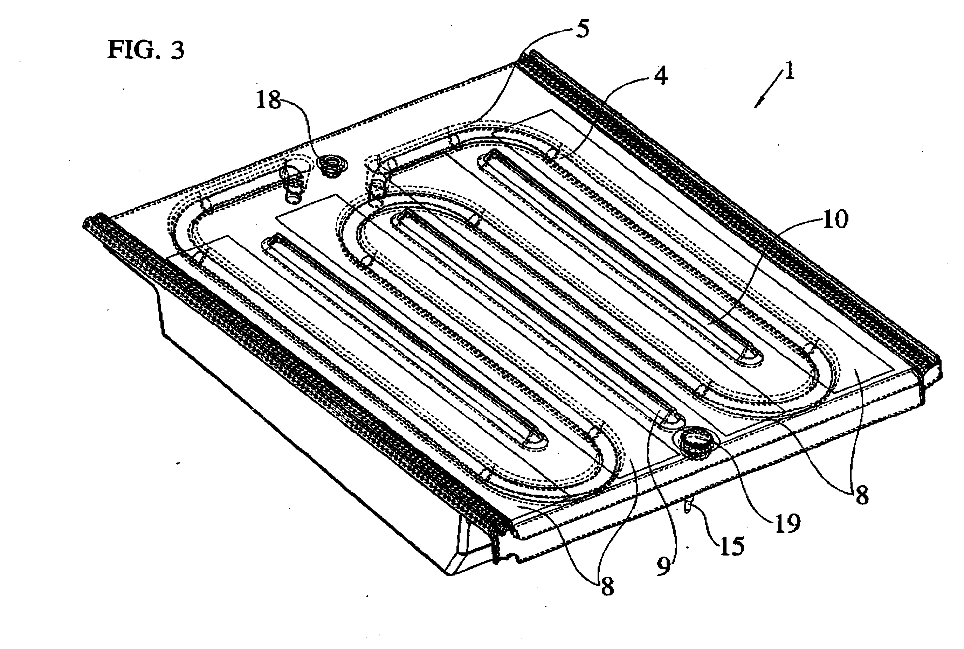

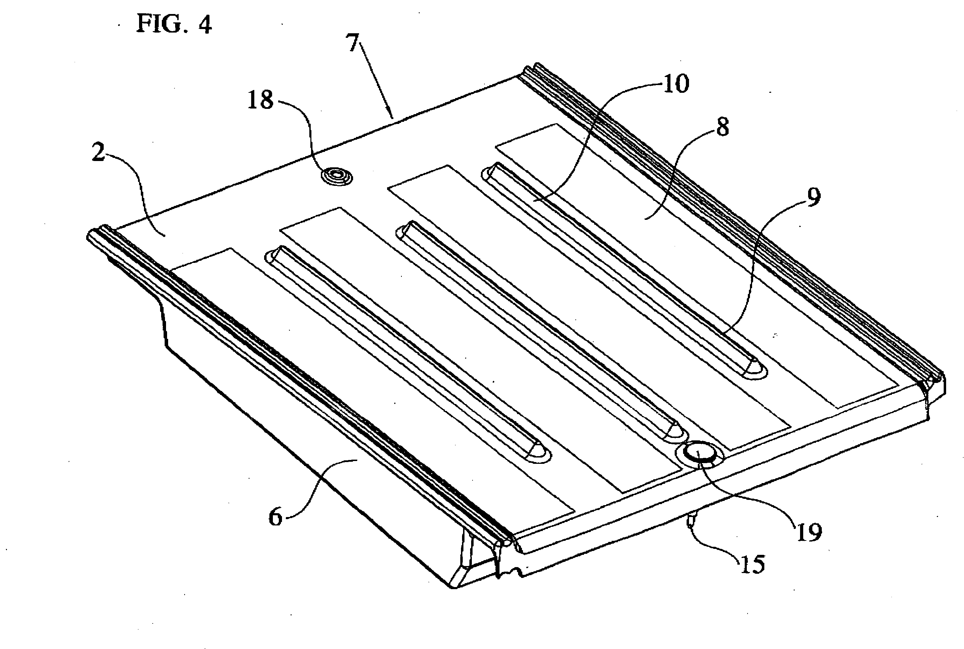

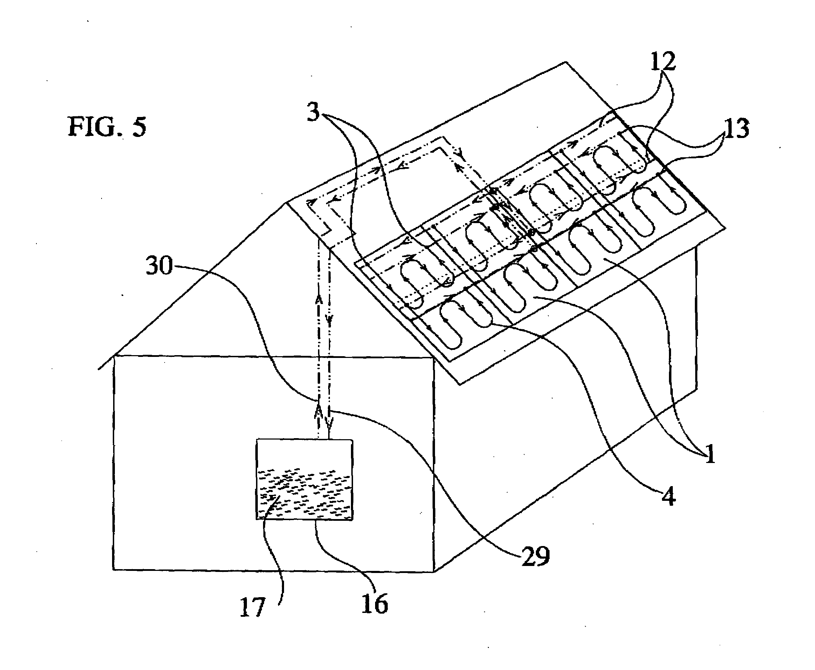

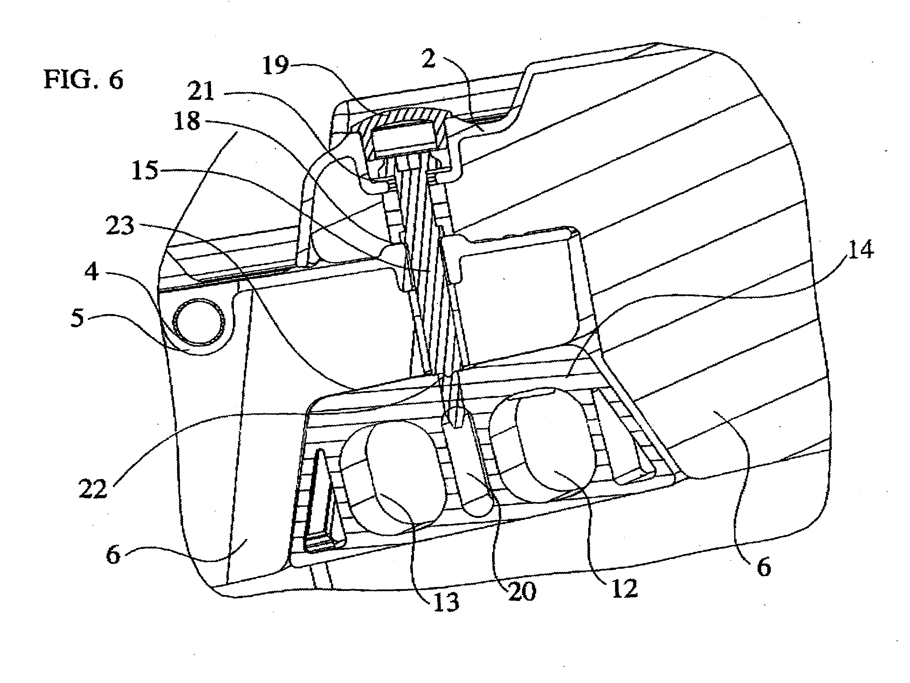

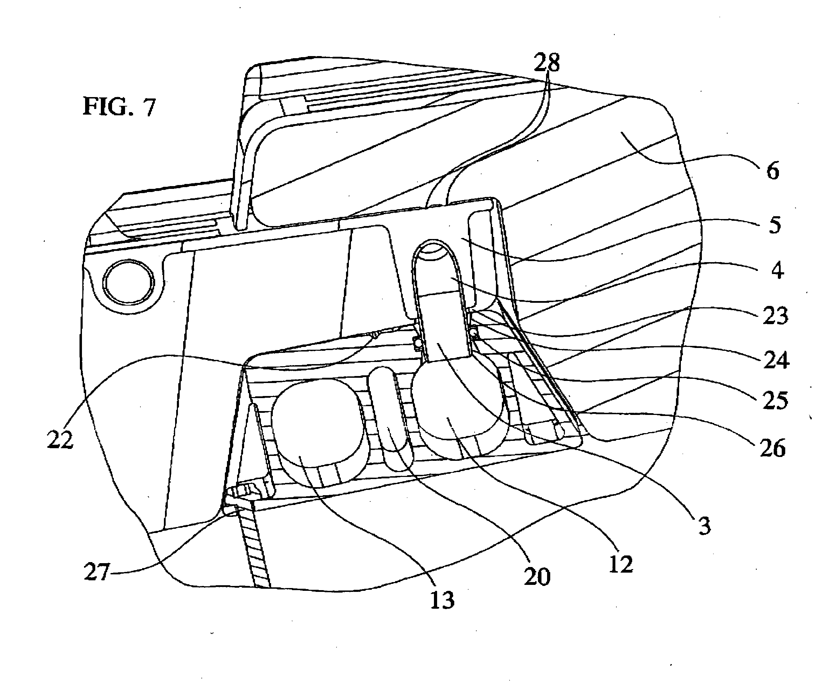

Weitere Einzelheiten und Vorteile der vorliegenden Erfindung werden anhand der Figurenbeschreibung unter Bezugnahme auf die in der Zeichnung dargestellten Ausführungsbeispiele im Folgenden näher erläutert. Dabei zeigt Fig. 1 einen Dachziegel in Unteransicht ohne Isolierung, Fig. 2 einen Querschnitt durch den Dachaufbau mit den Isolierkörpern und der Medienführung, Fig. 3 eine transparente Draufsicht auf den fluidleitungführenden Dachziegel, Fig. 4 einen Dachziegel von oben, Fig. 5 einen schematischen Ablauf des Fluidkreislaufes, Fig. 6 einen Querschnitt durch den Befestigungsbereich des Dachziegels und Fig. 7 einen Querschnitt durch den Bereich des Fluidanschlusses. Fig. 1 zeigt den Ziegelkörper 2 eines Dachziegels 1 von unten, wobei die Fluidleitung 4 durch die Fluidanschlüsse 3 aus dem Ziegelkörper 2 herausragt. Im Kanal 5 wird die Fluidleitung 4 geführt. Ebenfalls in der Unteransicht ist hier die Versteifungsrippe 9 ersichtlich. Für die Befestigung des Dachziegels 1 ist das Befestigungselement 15 vorgesehen.

Fig. 2 zeigt einen Querschnitt mehrerer Dachziegel 1, wobei in diesem Fall im unteren Bereich die Isolierkörper 6 dargestellt sind. Ebenfalls sind in diesem Querschnitt die Dachlatten 14 eingezeichnet wobei in den Dachlatten die Fluidverteilerleitung 12 und Fluidsammelleitung 13 ausgebildet sind. In diesem Fall bildet der rechte obere Teil der Dachlatte 14 die Fluidverteilerleitung 12 und der linke untere Teil die Fluidsammelleitung 13. Ebenfalls sind hierauf die Versteifungsrippenn 9 und die darauf befindlichen Sonnenlicht reflektierenden Bereiche 10 ersichtlich, die das Sonnenlicht auf die zwischen den Versteifungsrippen 9 liegenden Absorberbeschichtungen 8 lenken. In Fig. 2 sind die über den Befestigungselementen 15 (nicht dargestellt) angebrachten dichtenden Abdichtkappen 19, die vorzugsweise aus Kunststoff gefertigt sind, angebracht. Durch diese wird ein Eindringen von Niederschlag unter die Dachziegel 1 verhindert, da das Loch zur Einführung des Befestigungselementes 15 mittels der Abdichtkappen 19 von oben versiegelt ist. Diese Abdichtkappe 19 wandert bei Ausdehnung des gesamten Ziegelkörpers mit dem Befestigungselement mit.

Fig. 3 zeigt eine Draufsicht auf den Dachziegel 1, wobei die in den Kanal 5 eingesetzte Fluidleitung 4 zu erkennen ist. Durch die Auflage 18 und einen hier nicht dargestellten zweiten Ziegel 1 hindurch wird das Befestigungselement 15 eingeführt und an einer darunter liegenden Dachlatte 14 (nicht dargestellt) formschlüssig fixiert. Durch diese Befestigung wird die gesamte Dachhaut an den Dachlatten 14 und Konterlatten befestigt.

Fig. 4 zeigt einen gesamten Dachziegel 1, wobei im unteren Bereich der Isolierkörper 6 angebracht ist, mit der der sich darauf befindende Ziegelkörper 2 verbunden ist. Auf der Oberseite 7 sind hierbei die Versteifungsrippen 9, die Absorberbeschichtung 8, die Sonnenlicht reflektierenden Bereiche 10, die Auflage 18 und die Abdichtkappe 19 ersichtlich.

Fig. 5 zeigt einen schematischen Ablauf des Fluidkreislaufs. Hierbei fließt das Fluid 17 durch die Fluidhauptverteilerleitung 30 über die Fluidverteilerleitungen 12 in die Fluidleitungen 4 der Dachziegel 1, worin das Fluid 17 erwärmt wird, und läuft weiter über die Fluidsammelleitungen 13 und die Fluidhauptsammelleitung 29 und gelangt schließlich in den Wärmetauscher 16. Nach Abgabe der Wärme startet der Fluidkreislauf von Neuem. Die Fluidhauptverteilerleitung 30 und die Fluidhauptsammelleitung 29 sind in diesem Fall als Steigleitungen dargestellt, die das Fluid 17 zu den am Dach befindlichen Fluidverteilerleitungen 12 und Fluidsammelleitungen 13 bringen.

Fig. 6 zeigt einen Schnitt durch den überlappenden Bereich der Dachziegel 1, wobei hier im Detail gezeigt wird, wie der Dachziegel 1 an der Dachlatte 14 befestigt ist. Der Kopf des Befestigungselementes 18 weist gegenüber dem Ziegelkörper 2 ein Spiel in der Auflage 21 auf, um eine Längendehnung des oberen Ziegelkörpers 2 zu ermöglichen. Das heißt, dass bei hoher Ausdehnung oder bei starkem Zusammenziehen des Ziegelkörpers 2, das Befestigungselement 18 nicht durch die Kraft des Ziegelkörpers 2 verschoben oder geknickt werden kann. Im Generellen ist der in Richtung Giebel zeigende Befestigungsbereich eines jeden Dachziegels 1 mit sehr geringem Spiel auf der Dachlatte montiert, wogegen der in Richtung Traufe zeigende Befestigungsbereich eines jeden Dachziegels 1 mit großem Spiel mit der darunter liegenden Dachlatte 14 über das Befestigungselement 15 verbunden ist. Daraus ergibt sich, dass der Bereich wo die Fluidanschlüsse 3 ineinander greifen, sehr wenig Spannung bei Dehnung oder Zusammenziehen des Ziegelkörpers 2 entsteht, wodurch sicheine geringere Beanspruchung des gesamten Materials ergibt und somit die Lebensdauer der erfindungsgemäßen Dachziegel 1 steigt. Weiters ist ersichtlich, dass sich der Isolierkörper 6 auf der Auflagefläche 23 der Dachlatte 14 abstützt. Zwischen Fluidverteilerleitung 12 und Fluidsammelleitung 13 ist eine Isolationskammer 20 ausgebildet, um einen möglichst geringen Wärmeübergang zwischen den genannten Leitungen zu erreichen. In der Dachlatte 14 ist eine Zentrierung 22 vorgesehen, die die exakte Montage des Befestigungselementes 15 in der Dachlatte 14 erleichtert.

Fig. 7 zeigt einen Detailbereich der Überlappung der Dachziegel 1, wobei in diesem Fall der Querschnitt durch einen Fluidanschluss 3 dargestellt ist. Im Endbereich der Fluidleitung 4 ist dessen konischer Bereich 24 erkennbar, welcher das austauschen eines einzelnen Dachziegels 1 ermöglicht. Im Bereich des Fluidanschlusses 3 ist in der Dachlatte 14 bzw. im Fluidanschluss 3 der Fluidverteilerleitung 12 ein Dichtelement 25 angeordnet. Weiters ist erkennbar, dass die Anschlusskontur 26 des Fluidanschlusses 3 abgerundet bzw. abgefast ausgeführt ist, sodass beim Einsetzen des Fluidanschlussses 3 in die Dachlatte 14 bzw. in die Fluidverteilerleitung 12 keine Beschädigung des Dichtelementes 25 auftritt. In Fig. 7 ist ebenfalls dargestellt, wie die Dachlatte 14 über ein Befestigungselement 27 am Dach montiert wird. Ein weiteres Detail der Erfindung liegt in den optionalen Dichtwülsten 28, auf welchen der Isolierkörper 6 des oberen Dachziegels 1 auf dem Ziegelkörper 2 des unteren Dachziegels 1 aufliegt. Durch dieses Aufliegen wird ein direkter Kontakt von einem Ziegelkörper 2 auf einem anderen Ziegelkörper 2 vermindert. Dies führt zu deutlich geringerer Schallübertragung, da der direkte Kontakt zwischen den Ziegelkörpern 2, die bevorzugt aus Alulegierung hergestellt sind, vermindert wird. Somit kommt es beim erfindungsgemäßen Dachziegel 1 zu stark reduzierter Alu-Alu-Berührung, wodurch ein hoher Schallschutz erreicht wird. Bevorzugt ist zwar erfindungsgemäß vorgesehen, dass die Fluidleitung 4 des Dachziegels 1 aus diesem herausragt, jedoch ist auch eine Ausführung denkbar, bei der der Fluidanschluss 3 der Fluidverteilerleitung 12 bzw. der Fluidsammelleitung 13 in den Dachziegel 1 hineinragt, wodurch die Fluidleitung 4 bereits im Kanal 5 des Dachziegels 1 endet.

## Patentansprüche

1. Dachziegel mit einem Ziegelkörper, mindestens zwei Fluidanschlüssen und einer die Fluidanschlüsse verbindenden Fluidleitung, **dadurch gekennzeichnet, dass** der Ziegelkörper (2) einen Kanal (5) aufweist, in welchen die Fluidleitung (4) zumindest teilweise eingesetzt ist.

2. Dachziegel nach Anspruch 1, **dadurch gekennzeichnet, dass** der Dachziegel (1) einen unterhalb des Ziegelkörpers (2) und der Fluidleitung (4) angebrachten Isolierkörper (6) aufweist.

3. Dachziegel mit einem Ziegelkörper und einer Fluidleitung, insbesondere nach Anspruch 1 oder 2, **dadurch gekennzeichnet, dass** ein Isolierkörper (6) vorgesehen ist, wobei der Isolierkörper (6) mit dem Ziegelkörper (2) verbunden ist.

4. Dachziegel nach einem der Ansprüche 1 bis 3, **dadurch gekennzeichnet, dass** die Kontur der Fluidleitung (4) und die Kontur des Kanals (5) aneinander angepasst sind.

5. Dachziegel nach einem der Ansprüche 1 bis 4, **dadurch gekennzeichnet, dass** die Kanalwandung die Fluidleitung (4) zum Großteil kontaktiert.

6. Dachziegel nach einem der Ansprüche 1 bis 5, **dadurch gekennzeichnet, dass** die Fluidleitung (4) unterhalb der Oberseite (7) des Dachziegels (1) verläuft.

7. Dachziegel nach einem der Ansprüche 1 bis 6, **dadurch gekennzeichnet, dass** die Fluidleitung (4) unterhalb des Ziegelkörpers (2) verläuft.

8. Dachziegel nach einem der Ansprüche 1 bis 6, **dadurch gekennzeichnet, dass** die Fluidleitung (4) im Ziegelkörper (2) verläuft.

9. Dachziegel nach einem der Ansprüche 1 bis 8, **dadurch gekennzeichnet, dass** die Fluidleitung (4) vollständig vom Kanal (5) umschlossen ist.

10. Dachziegel nach einem der Ansprüche 1 bis 9, **dadurch gekennzeichnet, dass** auf der Oberseite (7) des Dachziegels (1) zumindest bereichsweise eine selektive Absorberbeschichtung (8), beispielsweise Titan-Nitrit-Oxid, aufgebracht ist.

11. Dachziegel nach einem der Ansprüche 1 bis 10, **dadurch gekennzeichnet, dass** auf dem Dachziegel (1) wenigstens eine, vorzugsweise drei, Versteifungsrippe/n (9) vorgesehen ist/sind.

12. Dachziegel nach Anspruch 11, **dadurch gekennzeichnet, dass** an der/den Versteifungsrippe/n (9) wenigstens ein Sonnenlicht reflektierender Bereich (10) angeordnet ist.

13. Dachziegel nach einem der Ansprüche 1 bis 12, **dadurch gekennzeichnet, dass** der Ziegelkörper (2) im Wesentlichen aus einer Aluminiumlegierung besteht.

14. Dachziegel nach einem der Ansprüche 1 bis 13, **dadurch gekennzeichnet, dass** die Fluidanschlüsse (3) an der von der Oberseite (7) des Dachziegels (1) abgewandten Seite des Ziegelkörpers (2) von diesem abstehen.

15. Dachziegel nach einem der Ansprüche 1 bis 14, **dadurch gekennzeichnet, dass** die Fluidanschlüsse (3) in unmittelbarer Umgebung eines Befestigungselementes (15) angeordnet sind.
